Europäisches Patentamt

European Patent Office

Office européen des brevets

(19)

(11) **EP 1 034 482 B1**

(12) **FASCICULE DE BREVET EUROPEEN**

(45) Date de publication et mention
de la délivrance du brevet:
**21.05.2003 Bulletin 2003/21**

(21) Numéro de dépôt: **98955731.9**

(22) Date de dépôt: **24.11.1998**

(51) Int Cl.⁷: **G06F 13/16**, H04L 12/56

(86) Numéro de dépôt international:
**PCT/FR98/02511**

(87) Numéro de publication internationale:
**WO 99/028828 (10.06.1999 Gazette 1999/23)**

(54) **DISPOSITIF DE GESTION PARTAGEE D'UNE RESSOURCE ENTRE PLUSIEURS UTILISATEURS**

VORRICHTUNG ZUR VERTEILTEN VERWALTUNG EINES BETRIEBSMITTELS ZWISCHEN
MEHREREN TEILNEHMERN

DEVICE FOR SHARED MANAGEMENT OF A RESOURCE AMONG SEVERAL USERS

(84) Etats contractants désignés:
**AT BE CH CY DE DK ES FI FR GB GR IE IT LI LU
MC NL PT SE**

(30) Priorité: **03.12.1997 FR 9715237**

(43) Date de publication de la demande:
**13.09.2000 Bulletin 2000/37**

(73) Titulaire: **Streamcore
92632 Gennevilliers Cedex (FR)**

(72) Inventeur: **DESPRES, Rémi
92399 Levallois-Perret (FR)**

(74) Mandataire: **Plaçais, Jean-Yves
Cabinet Netter,
36, avenue Hoche
75008 Paris (FR)**

(56) Documents cités:
**EP-A- 0 734 195          WO-A-91/08628**

## Description

L'invention concerne l'allocation d'une ressource informatique telle qu'une liaison de transmission de données ou une unité de traitement. Plus particulièrement, elle concerne un dispositif pour gérer le partage de cette ressource entre plusieurs utilisateurs usagers.

Un dispositif de ce type a notamment pour fonction de sélectionner un utilisateur parmi une partie au moins des utilisateurs usagers. La ressource effectue alors une quantité de service prédéterminée, pour cet utilisateur. En pratique, elle est successivement allouée aux utilisateurs sélectionnés, par tranches de service limitées (ou quanta), par exemple par temps de traitement partagé ou par transmission par paquets.

Chaque utilisateur possède un droit sur la ressource, qui peut être représenté par une quote-part ou "paramètre-part", associé à cet utilisateur. Ainsi, dans le cas d'un partage de la ressource entre plusieurs utilisateurs demandeurs, le paramètre-part d'un utilisateur peut lui conférer une priorité relative par rapport aux autres utilisateurs.

Cependant, la gestion de la ressource doit tenir compte d'impératifs liés à des délais d'attribution. C'est ainsi qu'un dispositif du type précité associe, à chaque utilisateur, une quantité représentative d'une progression. Cette quantité est susceptible d'avancer à chaque attribution de la ressource pour cet utilisateur, comme un compteur de tranches de service rendu. En pratique, la ressource est attribuée à l'un des utilisateurs demandeurs dont la quantité est la moins avancée. Un traitement classique consiste à comparer les quantités de tous les utilisateurs demandeurs. Lorsque le nombre d'utilisateurs en demande est important, cette comparaison induit d'emblée un délai prohibitif sur les attributions.

Dans l'un de ses travaux antérieurs, le Demandeur a proposé un dispositif capable de regrouper les utilisateurs par classes, selon un critère de classe prédéterminé. Ces classes sont construites comme des files de type "premier entré - premier sorti" (FIFO) de manière à ce qu'apparaisse, en tête de chaque file, l'utilisateur de quantité la moins avancée dans cette file. Ainsi, la comparaison des quantités précitée s'effectue sur un nombre restreint d'utilisateurs en tête de file. Intéressante, cette solution conserve néanmoins différents inconvénients. En effet, pour effectuer un tel regroupement, il est nécessaire d'imposer à chaque utilisateur un critère de classe. C'est ainsi que le critère choisi ici consiste à imposer un paramètre-part et un quantum à chaque utilisateur, à l'initialisation du traitement. Les utilisateurs sont alors répartis dans des files de telle sorte qu'à chaque file corresponde un couple de paramètre-part et quantum. Dans ce cas, la réduction des délais de traitement se fait au détriment d'une indépendance des paramètres-part associés aux utilisateurs et des quanta qui leur sont attribués.

L'invention vient améliorer la situation. Elle propose à cet effet un critère de classe qui, d'une part, n'impose qu'une seule grandeur pour définir ces classes, et d'autre part, permet de conserver une indépendance des paramètres-part associés aux utilisateurs.

L'invention part alors d'un dispositif comprenant une mémoire de travail, un moyen de décision pour attribuer des tranches de service choisies de la ressource, et un moyen de liaison mémoire, jouant le rôle d'interface entre cette mémoire et le moyen de décision.

La mémoire est agencée pour stocker des identifiants d'utilisateurs, ainsi que plusieurs paramètres-part, et plusieurs quantités susceptibles d'avancer. Le moyen de décision attribue alors une tranche de service à un utilisateur sélectionné comme possédant la quantité la moins avancée, et ce, dans un ensemble comprenant une partie au moins des utilisateurs. Il fait avancer ensuite la quantité de cet utilisateur sélectionné selon un incrément choisi. Enfin, à chaque identifiant d'utilisateur, le moyen de liaison mémoire associe le paramètre-part de cet utilisateur et sa quantité, tout en définissant des files d'utilisateurs de type "premier entré - premier sorti" (traduction du terme anglais First In First Out) (FIFO), telles que l'identifiant de tête d'une file désigne toujours l'utilisateur ayant la quantité la moins avancée dans cette file.

Selon l'invention, la mémoire de travail stocke en outre un nombre limité de valeurs d'incréments. Le moyen de liaison mémoire associe alors à chaque utilisateur l'une de ces valeurs d'incréments et définit lesdites files à partir desdites valeurs d'incréments en nombre limité. Enfin, le moyen de décision attribue à l'utilisateur sélectionné une tranche de service associée à un couple représenté par son paramètre-part et l'incrément de sa file, selon une loi prédéterminée. Ainsi, le critère de classe est, au sens de la présente invention, défini à partir d'un seul type de paramètre, correspondant aux incréments de file.

Selon une caractéristique optionnelle de l'invention, la loi prédéterminée comprend le fait que la tranche de service attribuée à un utilisateur sélectionné est fonction du produit de son paramètre-part par l'incrément de sa file.

Selon une autre caractéristique optionnelle avantageuse de l'invention, la mémoire stocke, en outre, une quantité globale susceptible d'avancer. Le moyen de décision fait alors avancer, à chaque attribution de la ressource, cette quantité globale selon un incrément global choisi. Le moyen de décision est agencé pour refuser toute attribution de ressource à un utilisateur tant que 1a quantité globale est moins avancée que la quantité de cet utilisateur. Cette technique permet notamment d'éviter d'attribuer la ressource à un utilisateur qui ne serait pas en mesure de l'utiliser.

Le moyen de décision définit un incrément global à chaque attribution de la ressource à un utilisateur. Il est tiré, de préférence, de l'incrément de file de cet utilisateur, et pondéré de sorte que l'avance de la quantité globale reste représentative des quantités de services successivement attribuées.

La mémoire de travail comprend une zone "files" dans laquelle sont inscrits, pour chaque file, son incrément et l'identifiant de son utilisateur de tête. Elle comprend également une zone "utilisateurs" dans laquelle sont inscrits, pour chaque utilisateur, son identifiant, son paramètre-part, ainsi qu'une information de fin de file. En pratique, cette information est définie, pour chaque utilisateur, par un état "dernier" ou "non dernier" de la file.

Selon un premier mode de réalisation de l'invention, on considère que le nombre d'utilisateurs à prendre en compte reste constant au cours du traitement.

Le moyen de liaison mémoire définit alors lesdites files en tant que listes circulaires (files de type "premier entré - premier sorti", cycliques). Un tel agencement des files permet de ne gérer qu'une seule quantité par file. Ainsi, le moyen de liaison mémoire n'associe qu'une seule quantité aux utilisateurs d'une même liste, et la zone "files" de la mémoire comprend une quantité pour chaque liste.

Le moyen de décision attribue des tranches de service aux utilisateurs de la liste de quantité la moins avancée. Il fait avancer la quantité de cette liste après l'attribution d'une tranche de service à l'utilisateur de fin de liste. En pratique, le moyen de décision attribue des tranches de service de l'utilisateur de tête de liste jusqu'à l'utilisateur de fin de liste, tant que les utilisateurs de cette liste restent aptes à utiliser la ressource.

Selon un second mode de réalisation plus élaboré, on considère que le nombre d'utilisateurs à prendre en compte peut varier au cours du traitement.

Ainsi, chaque utilisateur est susceptible de demander ou non une tranche de service de la ressource. Le dispositif comporte alors une liaison entrée/sortie, agencée pour distinguer les utilisateurs demandeurs des utilisateurs qui ne sont plus demandeurs de la ressource.

Par ailleurs, le moyen de liaison mémoire coopère avec cette liaison entrée/sortie pour définir des files distinctes d'utilisateurs nouvellement demandeurs et d'utilisateurs anciennement demandeurs (déjà en attente de la ressource depuis la dernière attribution). Le moyen de liaison mémoire est ainsi apte à affecter les nouveaux entrants, d'une quantité établie par rapport à une grandeur choisie. En pratique, cette grandeur doit être relative à l'avance des attributions, telle que la quantité globale précitée.

Quant aux utilisateurs devenus non demandeurs, le moyen de liaison mémoire est agencé pour les maintenir dans leur file tant qu'ils n'apparaissent pas en tête de file. Il coopère alors avec le moyen de décision pour éliminer d'une file un utilisateur non demandeur apparaissant en tête de cette file. En pratique, cette élimination concerne des utilisateurs non demandeurs, possédant la quantité la moins avancée parmi celles des utilisateurs apparaissant en tête de file et autorisés à utiliser la ressource. Ainsi, le moyen de liaison mémoire n'a pas à rechercher, en cours de traitement, un utilisateur devenu non demandeur dans les différentes files, ce qui risquerait de ralentir ou, de manière plus générale, de perturber la cadence des attributions.

D'autres caractéristiques et avantages de l'invention apparaîtront à l'examen de la description détaillée ci-après, des annexes et des dessins annexés sur lesquels :

- la figure 1 illustre schématiquement les interactions entre la ressource, le dispositif - gestionnaire de la ressource, et N utilisateurs $u_1$, $u_2$,...,$u_N$(ou entités utilisatrices),

- la figure 2 illustre schématiquement les interactions entre différents éléments que comporte le dispositif, et les N entités utilisatrices,

- la figure 3a représente schématiquement la structure fonctionnelle de la mémoire de travail du dispositif selon un premier mode de réalisation de l'invention, et

- la figure 3b représente schématiquement la structure fonctionnelle de la mémoire de travail du dispositif selon un second mode de réalisation de l'invention.

- En annexe I sont retranscrits le traitement qu'effectue le dispositif selon le premier mode de réalisation précité, ainsi que les notations utilisées pour ce traitement.

- En annexe II sont retranscrits le traitement qu'effectue le dispositif selon le second mode de réalisation, ainsi que les notations employées.

- En annexe III est retranscrit un élément du traitement prévu à l'initialisation, permettant de construire les files d'utilisateurs.

- Enfin, en annexe IV sont retranscrites les formules du texte courant, représentées par un chiffre entre parenthèses.

Les dessins et les annexes contiennent, pour l'essentiel, des éléments de caractère certain. Ils pourront donc non seulement servir à mieux faire comprendre la description, mais aussi contribuer à la définition de l'invention, le cas échéant.

Les documents faisant partie de l'art antérieur, et cités ci-après, sont analysés avec la même terminologie que celle utilisée pour décrire la présente invention. Il en découle une interprétation qui peut aller au-delà du contenu objectif desdits documents, aux yeux d'homme du métier ne connaissant par encore l'invention.

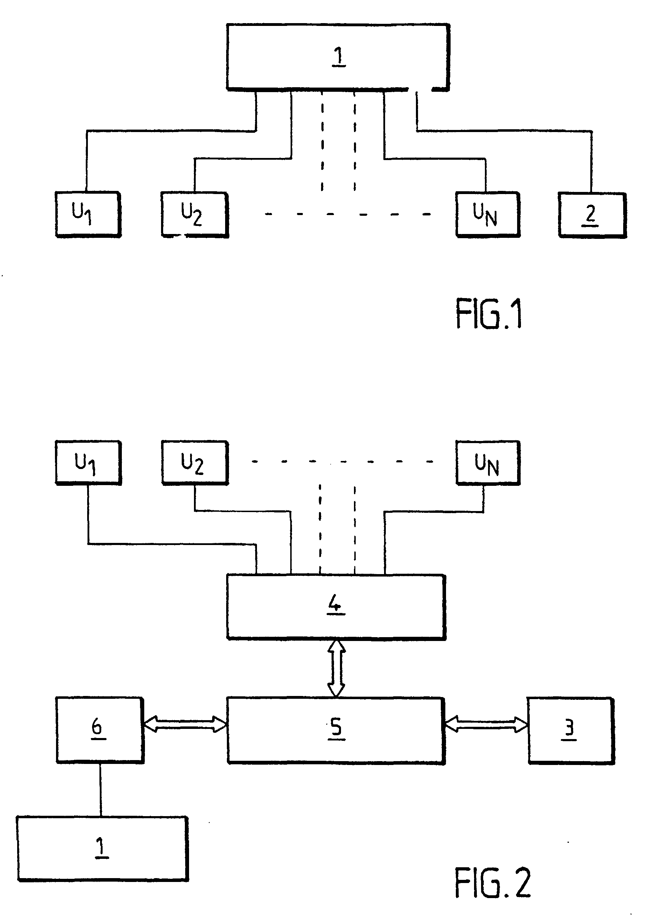

On se réfère tout d'abord à la figure 1 sur laquelle une ressource 1, telle qu'une liaison de transmission de données ou une unité centrale de traitement, est partagée entre un nombre N d'entités utilisatrices, $u_1,...,u_N$, par exemple, entre N applications d'ordinateurs ou N communications dans des noeuds de réseau. Un dispositif 2 pour gérer la ressource 1, affecte celle-ci par quantités de service à des entités utilisatrices successivement sélectionnées. Chaque attribution de service à une entité utilisatrice $u_i$ est faite pour une quantité de service choisie : le quantum $Q_i$ de cette attribution. L'entité utilisatrice peut consommer ou non la totalité de ce quantum.

Le dispositif de gestion de la ressource 2, tel qu'il apparaît sur la figure 2, comporte une liaison entrée/sortie 4, par exemple un bus de communication avec les N entités utilisatrices. Il comporte en outre une mémoire de travail 3, en laquelle sont enregistrées notamment des données relatives aux entités utilisatrices $u_1,...,u_N$, ainsi qu'un moyen de liaison mémoire 5, telle qu'une interface mémoire entre la liaison entrée/sortie 4 et la mémoire 3. Enfin, le dispositif décrit comporte un moyen de décision 6 (faisant partie, par exemple, une unité centrale de traitement), capable notamment de sélectionner l'une des entités pour que la ressource lui soit affectée.

Dans l'exemple décrit, la gestion de la ressource est effectuée en temps partagé, avec pour contrainte de respecter une équité de partage entre les N entités utilisatrices. Ainsi, le quantum $Q_s$ de chaque attribution correspond à une durée de service relative à l'exécution d'une tâche par la ressource, pour une entité sélectionnée $u_s$. De manière à respecter une équité de partage entre les entités utilisatrices, un paramètre-part associé à chaque entité selon des critères externes au dispositif-gestionnaire de ressource 2, est enregistré dans la mémoire de travail 3. Dans le cas d'une gestion en temps partagé, ces paramètres-part (ou débits nominaux) sont proportionnels à des vitesses moyennes d'exécution désirées pour chaque entité. Ainsi, le gestionnaire de ressource 2 doit attribuer à une entité utilisatrice $u_i$ des quantités de service $Q_i$ qui, cumulées sur des durées quelconques, soient au mieux proportionnelles à son paramètre de débit nominal D(i). La charge de la ressource $\gamma(t)$, en fonction du temps t et pour N entités utilisatrices $u_1,...,u_N$, peut alors être définie par la relation (1), donnée en annexe IV de la présente demande.

Pour assurer une gestion performante de la ressource, on cherche généralement à limiter le retard que peut prendre, pour chaque entité utilisatrice, le cumul des quanta qui lui sont effectivement attribués. Ce retard (ou temps de traitement) est estimé par rapport à une attribution idéale, rigoureusement proportionnelle au débit nominal de l'entité. Il est évalué sur des durées pendant lesquelles l'entité utilisatrice reste en permanence apte à utiliser la ressource. En revanche, ce retard n'a guère de sens sur les périodes éventuelles pendant lesquelles l'entité utilisatrice cesse d'être demanderesse.

Dans l'une des ses travaux antérieurs décrit par le document :

[1] - "Algorithme d'allocation d'unité centrale pour calculateurs exploités en temps partagé" (R.Després et A.Bache, *Annales des Télécommunications,* p.19, 1972),

le Demandeur propose un modèle pour la gestion de ressource en temps partagé qui s'appuie sur un traitement en parallèle des entités utilisatrices. La ressource est allouée alternativement pour des tâches en cours d'exécution, réclamant un traitement équivalent à la possession complète de la ressource pendant un temps-quantum Q. Chaque tâche est ainsi exécutée d'autant moins vite que le nombre d'entités utilisatrices demanderesses est important.

Pour chaque entité utilisatrice nouvellement demanderesse $u_i$, la date $d_i(t)$ de sa dernière demande de quantum $Q_i(t)$ à l'instant t, est connue. A partir du quantum $Q_i(t)$, il est possible d'évaluer la date future $f_i(t)$ à laquelle le quantum demandé $Q_i(t)$ sera totalement exécuté, si toutefois on connaît l'évolution dans le temps de la charge $\gamma(t)$ de la ressource. En effet, $f_i(t)$ est liée à $Q_i(t)$ par la relation (2) donnée en annexe IV.

Afin de s'affranchir des variations de la charge $\gamma(t)$ de la ressource, une échelle de temps virtuel est de préférence utilisée. En pratique, il s'agit du temps réel ralenti par la charge de la ressource. Une date virtuelle à l'instant t est alors définie par la relation (3) de l'annexe IV, dans laquelle $t_0(t)$ correspond au dernier instant t auquel la charge $\gamma(t)$ est nulle.

Dans cette échelle de temps virtuel, il est possible d'estimer une échéance de fin d'exécution d'un quantum $Q_i(t)$, définie par la relation (4) (annexe IV).

Le Demandeur montre alors que l'échéance virtuelle $E_i(t)$, estimée pour une entité utilisatrice $u_i$, peut s'écrire en fonction de son débit nominal $D_i$ et du quantum demandé $Q_i$, par la relation (5) (annexe IV). Le terme additif $Q_i/D_i$ correspond ainsi à une progression de l'échéance virtuelle $E_i$ de l'entité $u_i$, d'une attente de quantum à la suivante. De façon plus générale, le traitement se déroule de telle sorte qu'à chaque attribution de la ressource à une entité $u_i$, une quantité associée à cette entité, et représentée ici par son échéance virtuelle $E_i$, avance d'un incrément choisi $dE_i$,

équivalent au rapport $Q_i/D_i$.

Puisque le temps virtuel apparaît comme étant une fonction strictement croissante du temps réel, il est possible de prévoir, pour plusieurs entités utilisatrices en demande, un ordre dans les fins d'exécution de leurs quanta respectifs, en traitement parallèle.

Afin de limiter les retards (ou "gigues") susceptibles d'être subis par les entités par rapport à une proportionnalité stricte aux débits nominaux, il est nécessaire de définir en outre un état d'éligibilité, associé à chaque entité utilisatrice, et fonction d'une comparaison de son échéance virtuelle, à une heure virtuelle V qu'entretient le gestionnaire de ressource. En pratique, il s'agit de repérer les entités utilisatrices qui, provisoirement, ne doivent pas utiliser la ressource (inéligibles), ce qui se traduit par une condition supplémentaire liée à un état "temporisant", décrit dans le document [1].

Le gestionnaire de ressource attribue alors un quantum à l'entité utilisatrice $u_s$, éligible et d'échéance virtuelle la plus proche (la plus petite des échéances virtuelles).

Cependant, cette gestion de ressource en traitement parallèle de N entités utilisatrices, nécessite, entre chaque attribution de quantum, un temps de traitement qui croît avec le nombre d'entités N. De plus, si les N entités utilisatrices deviennent éligibles à la même heure virtuelle, ce temps de traitement devient proportionnel au nombre d'entités N.

L'un des buts à atteindre est alors de faire en sorte que, entre chaque attribution de quantum, le temps de traitement nécessaire au gestionnaire de ressource pour la sélection d'une entité, soit indépendant du nombre N d'entités utilisatrices.

Le Demandeur a alors proposé dans le document :

[2] - "A packet switching network with graceful saturated operation" (R.Després, *International Conference and Computer Communications,* p.345, 1972),

un procédé qui s'appuie sur une gestion d'un nombre limité de files d'entités utilisatrices. Ces files sont de type "premier entré - premier sorti" (FIFO). Dans ce document, le gestionnaire de ressource impose aux entités utilisatrices des valeurs de couples standards "débit nominal - quantum". Chaque FIFO correspond à une valeur de couple standard "débit nominal - quantum".

Le gestionnaire de ressource entretient une heure virtuelle, ce qui permet de gérer les entités utilisatrices par FIFOs, en calculant une progression d'échéance virtuelle, et une échéance virtuelle pour chaque FIFO. Un état d'éligibilité est ainsi déterminé pour chaque FIFO. Le gestionnaire de ressource attribue un quantum à l'entité utilisatrice apparaissant en tête (entité utilisatrice la plus ancienne) de la FIFO éligible, dont l'échéance virtuelle est la plus proche.

Par ce procédé, le temps de traitement moyen ne croît plus avec le nombre N d'entités utilisatrices, mais seulement avec le nombre de FIFOs, constant par rapport au nombre d'entités utilisatrices N.

Cependant, ce type de gestionnaire présente l'inconvénient d'imposer aux entités utilisatrices des valeurs en nombre limité de débits nominaux et de quanta. Puisque l'indépendance des débits nominaux n'est plus respectée, le dispositif décrit dans le document [2] n'assure pas une équité de partage, au sens strict, entre les entités.

La technique décrite dans le document [1] et visant à comparer les échéances virtuelles des entités utilisatrices en tenant compte de leur état d'éligibilité, assure un partage équitable. Elle permet en outre d'obtenir une indépendance des quanta et des débits nominaux. Pour faire en sorte que, avec cette technique, le temps de traitement nécessaire au gestionnaire de ressource pour sélectionner une entité utilisatrice, soit indépendant du nombre d'entités N, l'approche qui consiste à les regrouper dans un nombre limité de FIFOs convient a priori. Avec les évolutions des performances des applications actuelles (réseaux "internat", ...), il est important de s'affranchir de la contrainte qu'impose le gestionnaire de ressource par rapport au choix des débits nominaux des entités.

Le but de l'invention est d'atteindre à la fois les deux objectifs d'indépendance des débits nominaux et de temps de traitement constants.

Le gestionnaire de ressource selon l'invention s'appuie sur la comparaison d'échéance virtuelle et sur des états d'éligibilité de FIFOs. Cependant, ces FIFOs sont construites de la manière suivante :

a) - des valeurs d'incréments en nombre limité, ou de progressions d'échéances virtuelles (ou périodes P(c)) dans l'exemple décrit, sont imposées par le gestionnaire de ressource,
b) - chaque valeur de période P(c) caractérise une FIFO (ou classe c), et
c) - chaque entité utilisatrice u est affectée à une classe telle que sa progression d'échéance virtuelle calculée Q (u)/D(u) corresponde, par défaut, à la période P(c) de cette classe.

Dans l'exemple décrit, la progression d'échéance virtuelle peut être calculée à partir du rapport du quantum Q(u) par le débit nominal D(u) de chaque entité utilisatrice u. Ainsi, chaque entité utilisatrice est affectée à une classe de période P(c) telle que le quantum qui résulte de la formule Q(u)=P(c)*D(u), soit compatible avec le retard maximal désiré pour cette entité.

Cette affectation est basée sur une technique qui consiste à rechercher un quantum qui, tout en étant inférieur à l'ordre de grandeur désiré pour ce retard, soit aussi grand que possible. Le traitement prévu à cet effet est retranscrit en annexe I de la présente demande, et se déroule à l'initialisation des traitements principaux (annexes II et III).

Considérant n entités utilisatrices d'identifiants u=1,..., u=n présentant une première demande de quantum à un temps $t_0$ (initialisé à 0), le dispositif-gestionnaire de ressource selon l'invention évalue pour chaque entité un rapport du quantum maximum autorisé Qmax par son débit nominal D(u). Si toutes les classes sont indexées de 1 à m, et de périodes respectives P(1),...,P(m), croissantes, l'entité utilisatrice qui a un rapport de son quantum par son débit nominal tel que $P(c) \leq Qmax/D(u) < P(c+1)$, est affectée à la classe de période P(c).

Les différentes classes sont définies en tant que FIFOs. Le gestionnaire de ressource attribue un quantum Q(u)=P(c)*D(u) à l'entité utilisatrice u apparaissant en tête de la FIFO de période P(c) et dont l'échéance virtuelle F(u) est la plus petite parmi celles des entités utilisatrices apparaissant en tête de leur FIFO.

Cependant, le gestionnaire de ressource doit éviter d'attribuer des quanta à des entités utilisatrices qui, provisoirement, ne doivent pas utiliser la ressource (inéligibles). Une approche classique consiste à surveiller l'instant où l'heure virtuelle V du gestionnaire de ressource atteint l'échéance virtuelle la plus proche parmi celles des entités utilisatrices en attente de ré-éligibilité.

Si le nombre d'entités utilisatrices demanderesses reste fixe, ainsi que leur débit nominal et leur quantum, toutes les entités utilisatrices de la même classe peuvent rester synchronisées. Ainsi, la suite de leur échéance virtuelle peut être rigoureusement la même. Il suffit de gérer une variable d'échéance virtuelle pour chaque classe, et non plus pour chaque entité utilisatrice.

Selon un premier mode de réalisation de la présente invention, les FIFOs sont définies en tant que listes circulaires, avec une information de fin de liste associée, dans l'exemple décrit, à chaque entité utilisatrice d'une liste (drapeau "non-dernier de la liste") (nd(u)). Le moyen de liaison mémoire 5 du gestionnaire de ressource, définit une seule échéance virtuelle F(c) par liste c de période P(c). Le moyen de décision 6 sélectionne la liste d'échéance virtuelle la plus petite. Après l'attribution de la ressource à l'entité de fin de liste (nd(u) = "faux"), le moyen de décision 6 fait progresser l'échéance virtuelle F(c) de cette liste d'un incrément équivalent à sa période P(c).

La ressource est attribuée par quanta qui sont fonction du débit nominal associé à chaque entité de la liste, selon l'expression Q(u)=D(u)*P(c).

Le traitement détaillé équivalent est retranscrit en annexe II de la présente demande. Il reprend, à titre d'exemple, le principe de fonctionnement du dispositif selon le premier mode de réalisation de l'invention.

Dans l'exemple, les débits nominaux, les quanta demandés, et le nombre n d'entités utilisatrices, restent fixes.

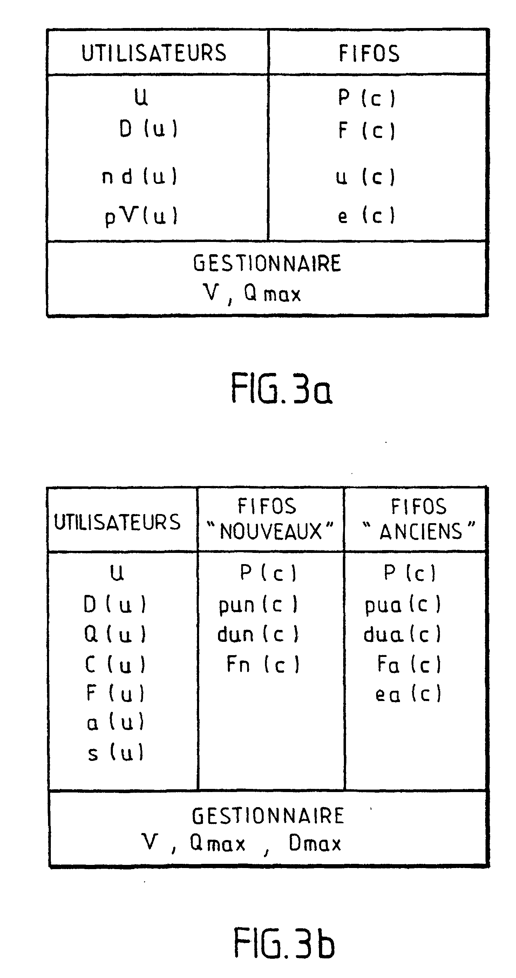

Une structure suivant une zone "entités utilisatrices" et une zone "FIFOs" de la mémoire de travail 3 est représentée sur la figure 3a. Dans la zone "entités utilisatrices" figurent, pour chaque entité, un identifiant u, son débit nominal D(u), ainsi qu'une information de fin de file : attribut nd(u). Dans la zone "FIFOs" figurent, pour chaque liste, sa période P(c), son échéance virtuelle F(c) et l'identifiant de l'entité de tête u(c).

A l'initialisation du gestionnaire de ressource, la charge de la ressource est nulle, et l'heure virtuelle, notée V, vaut 0 ($q(t_0)=0$). Elle évolue par la suite comme une variable entière modulo $2^p$, où p est, par exemple, une longueur de mot ($p \in \mathbb{N}^*$).

Le gestionnaire de ressource attribue à chaque entité une valeur imposée de progression d'échéance virtuelle par défaut. Chaque entité est alors affectée à une classe de période correspondant à cette valeur imposée de sa progression d'échéance virtuelle. Dans chaque classe, les entités utilisatrices sont rangées par ordre d'entrée (FIFO). En pratique, cet ordre peut être fixé dans chaque liste circulaire de façon arbitraire, à l'initialisation. Les échéances virtuelles de chaque classe, notées F(c), sont initialisées à 0. Les états d'éligibilité des classes, notés e(c), sont initialisés à "Faux".

A chaque attribution, le traitement initialise à 0 le nombre de classes éligibles, noté nE. L'échéance minimale des entités utilisatrices inéligibles, notée FmI, est initialisée à $FmI = V + 2^{(p-1)} - 1$. Cette valeur est nécessairement supérieure à toute valeur possible de l'échéance virtuelle d'une entité utilisatrice. Elle est ainsi supérieure à V, mais d'un écart inférieur à l'entier positif maximal suivant.

Ce traitement tient compte des classes éligibles et des classes inéligibles. Cependant, il peut encore être simplifié si les progressions de l'heure virtuelle pV(u) associées aux entités utilisatrices sont des nombres entiers exacts. En effet, il est impossible dans ce cas que toutes les entités utilisatrices soient inéligibles avec une échéance supérieure à l'heure virtuelle. Ainsi, les ordres destinés à traiter cette situation peuvent être éliminés : la deuxième partie de la ligne (1) ($FmI = V + 2^{(p-1)} - 1$), la ligne (7), et la ligne (12) du traitement.

Les lignes (2) et (3) du traitement imposent le fait que, pour une classe d'entités inéligibles, si l'échéance virtuelle de la classe a dépassé l'heure virtuelle, cette classe devient éligible et son échéance virtuelle progresse d'une quantité équivalente à sa période P(c).

Les lignes (4), (5) et (6) imposent le fait que, pour toute classe éligible, si le nombre de classes éligibles vaut "1" ou si l'échéance virtuelle de la classe est la plus petite des échéances virtuelles des classes éligibles, alors la classe considérée est sélectionnée et l'échéance minimale des classes éligibles devient l'échéance virtuelle de cette classe.

La ligne (8) signifie ensuite que l'entité utilisatrice sélectionnée correspond à la tête de la FIFO de la classe sélectionnée en fin de comparaison sur les m classes.

Le quantum attribué Q(uS) à l'entité utilisatrice sélectionnée correspond au produit de la période de la classe à laquelle était affectée l'entité utilisatrice, par le débit nominal de cette entité, soit Q(uS) = P(cS)*D(uS).

La classe sélectionnée reste éligible tant que l'entité utilisatrice sélectionnée est non dernière de sa classe (ligne (10)). L'heure virtuelle progresse alors d'une quantité pV(uS) (ligne (11)) équivalente au rapport du quantum attribué par la somme des débits nominaux sur les entités utilisatrices (équivalente à la charge de la ressource), soit la relation (6) qui apparaît en annexe IV.

Ce premier mode de réalisation est particulièrement approprié au cas où le nombre d'entités utilisatrices demanderesses reste constant en cours de traitement.

Le cas où le nombre d'entités demanderesses varie en cours de traitement, est décrit ci-après.

Habituellement, les entités utilisatrices qui ont cessé d'être demanderesses, sont, selon une approche classique décrite notamment dans le document [2], éliminées de toute FIFO dès l'instant où elles redeviennent éligibles. En pratique, suite à une information que communique la liaison entrée/sortie 4, le moyen de liaison mémoire 5 recherche alors systématiquement toute entité utilisatrice éligible qui a cessé d'être demanderesse, pour l'éliminer de sa FIFO. Il s'agit d'affecter, à chaque entité, un attribut "actif" (demandeur), prenant un état "vrai" ou "faux", comme le propose le traitement retranscrit en annexe III (a(u) = vrai ou faux).

L'inconvénient de l'approche classique est que, dans le cas le plus défavorable, les échéances virtuelles des entités peuvent être, à un moment donné, toutes égales. Dès l'instant où l'heure virtuelle a atteint cette échéance, le test qui permet d'éliminer les entités qui ont cessé d'être demanderesses, est effectué sur toutes les entités. Ainsi, le temps de traitement est proportionnel au nombre total d'entités. Il peut en résulter, pour la prochaine entité à servir, un retard qui dépend de ce nombre. L'objectif visant des temps de traitement constants n'est pas atteint dans ce cas.

Selon le second mode de réalisation de la présente invention, on renonce à éliminer une entité utilisatrice qui a cessé d'être demanderesse, dès que son échéance précédente a été atteinte par l'heure virtuelle. En effet, une entité non demanderesse est maintenue dans sa FIFO jusqu'au moment où elle apparaît en tête. Le moyen de décision 6 la sélectionne en tant qu'entité utilisatrice éligible d'échéance virtuelle la plus petite, et coopère avec le moyen de liaison mémoire 5 pour l'éliminer ensuite de toute FIFO.

Ainsi, le temps de traitement d'élimination de chaque entité non demanderesse est indépendant du nombre total d'entités. De plus, quel que soit le nombre d'entités non demanderesses qui sont éliminées à l'occasion de la sélection d'une entité demanderesse, le retard de service subi par celle-ci n'est pas supérieur à ce qu'il aurait été si ces entités non demanderesses, au lieu d'être éliminées, avaient fait l'objet d'une attribution de quantum effective.

Par ailleurs, le gestionnaire de ressource, selon ce second mode de réalisation de l'invention, est agencé pour regrouper les entités utilisatrices nouvellement demanderesses, dans des classes distinctes. Il devient possible ainsi de surmonter les difficultés liées à une variation du nombre d'entités demanderesses. Le gestionnaire de ressource distingue deux types de classes : les classes d'entités utilisatrices nouvellement demanderesses et les classes d'entités utilisatrices qui étaient déjà demanderesses avant la dernière attribution de quantum (figure 3b). Les échéances des entités utilisatrices nouvellement demanderesses sont alors déterminées à partir d'une variable interne du gestionnaire de ressource, de préférence à partir de l'heure virtuelle. Les entités sont réparties dans les classes de période P(c), mais, dans l'exemple décrit, elles conservent leur propre échéance virtuelle F(u), estimée depuis leur entrée (état "actif" vrai).

Une structure suivant une zone "entités utilisatrices" et une zone "FIFOs" de la mémoire de travail 3 est représentée sur la figure 3b, selon ce second mode de réalisation. Dans la zone "entités utilisatrices" figurent, pour chaque entité, un identifiant u, son débit nominal D(u), son échéance virtuelle F(u), son état d'activation a(u), ainsi qu'une information de suite de file s(u). Dans la zone "FIFOs des entités nouvellement demanderesses" figurent, pour chaque FIFO c, sa période P(c), des informations de tête de file pun(c) et de fin de file dun(c), et l'échéance virtuelle Fn(c) de l'entité en tête de file. Dans la zone "FIFOs des entités anciennement demanderesses" sont stockés les attributs de tête pua(c) et de fin de FIFO dua(c), l'échéance virtuelle Fa(c) de l'entité de tête, ainsi que son état d'éligibilité ea(c).

Bien entendu, l'invention n'est pas limitée à la forme de réalisation décrite précédemment à titre d'exemple, elle s'étend à d'autres variantes.

Ainsi, on comprendra que le nombre de classes que gère le dispositif peut varier suivant les applications. Les retards de service obtenus sont d'autant plus adéquats que le nombre de classes gérées est important.

La présente invention peut s'appliquer à des dispositifs informatiques dont le système d'exploitation partage une unité centrale de traitement entre plusieurs tâches.

Elle peut aussi concerner des noeuds de réseau à commutation par paquets (noeuds de réseaux "internet", etc...) qui partagent au moins une liaison de transmission de données entre plusieurs courants d'informations.

Dans l'exemple décrit ci-avant, l'allocation de la ressource se fait par temps de traitement finis (gestion en temps partagé). Cependant, l'invention s'applique aussi bien à une allocation par transmission par paquets (liaison de transmission), les quanta étant définis alors par quantités d'informations transmises. De manière générale, l'invention s'applique à des allocations par tranches de service , l'essentiel étant que chaque file d'utilisateurs soit associée à un incrément défini pour compter un cumul pour chaque utilisateur, représentatif des services rendus à cet utilisateur.

Par ailleurs, les traitements décrits peuvent être simplifiés davantage. C'est ainsi que dans l'exemple de réalisation décrit, il est possible de s'affranchir des états d'éligibilité. Cependant, le fait d'introduire ces états dans la gestion de la ressource, permet d'éviter des distorsions éventuelles du gestionnaire.

Les valeurs d'incréments des échéances virtuelles, ainsi que celles des progressions de l'heure virtuelle, sont ici définies dans le cas d'une gestion en temps partagé, à titre d'exemple. Elles peuvent être différentes suivant la nature des attributions. Le signe de ces valeurs d'incréments peut par ailleurs être négatif, pourvu que la progression de l'heure virtuelle et celles des échéances virtuelles aillent dans le même sens.

L'invention peut s'exprimer sous la forme du produit industriel nouveau que constitue le dispositif de gestion d'une ressource du type précité. Elle peut aussi bien s'exprimer sous la forme du traitement appliqué à un ordinateur ou à un noeud de réseau, pour gérer le partage de cette ressource.

### ANNEXE I

Les initialisations de l'identifiant de classe c et de la valeur de quantum des entités utilisatrices se font de préférence comme suit :

- les valeurs de quanta sont astreinte à ne pas dépasser une borne Qmax, paramètre global du gestionnaire de ressource,
- la classe c(u) à laquelle est affectée l'entité u est définie en fonction de son débit nominal D(u) par :

si $\quad P(c) = \max [P(i)]$, pour i=1 à m,
tel que $p(i)*D(u) \leq Qmax$

alors $\quad c(u) \leftarrow c$

Si pour une entité utilisatrice u, aucune classe i ne respecte la condition $P(i)*D(u) \leq Qmax$, les paramètres du système ne sont pas cohérents. Il convient alors :

- d'augmenter la valeur de Qmax, ou
- de définir une classe de période P(c) suffisamment petite,

ou encore

- d'augmenter la valeur D(u) du débit nominal de l'entité u.

### ANNEXE II

Notations

| | |
|---|---|
| $G( ) \rightarrow uS,Q$ | Fonction d'appel du gestionnaire de ressource |
| uS | Indice de l'entité utilisatrice sélectionnée |
| Q(uS) | Quantum attribué à l'entité utilisatrice sélectionnée |
| 1,...,u,...,n | Identifiants des n entités utilisatrices |
| 1,...,c,...,m | Identifiants des m classes d'entités utilisatrices |
| P(1),...,P(c),...,P(m) | Pour chaque classe d'indice c, valeur de sa période P(c) |
| c(1),...,c(u),...,c(n) | Pour chaque entité utilisatrice, indice de sa classe |
| s(1),...,s(u),...,s(m) | Pour chaque entité, identifiant de l'entité suivante dans une liste circulaire des entités utilisatrices de la même classe |
| u(1),...,u(c),...,u(m) | Pour chaque classe, indentifiant de l'entité en tête de file |
| nd(1),...,nd(u),...,nd(m) | Pour chaque entité u, drapeau initialisé à "Vrai" si et seulement si elle n'est pas la dernière de sa liste |

F(1),...,F(c),...,F(m)    Echéances virtuelles des classes
V    Heure virtuelle de G
pV(1),...,pV(u),...,pV(n)    Pour chaque entité u, progression de l'heure virtuelle lorsqu'elle est servie
e(1),...,e(c),...,e(m)    Etats d'éligibilité des classes
FmE    Echéance virtuelle minimale parmi celles des entités utilisatrices éligibles
FmI    Echéance virtuelle minimale parmi celles des entités utilisatrices inéligibles
nE    Nombre de classes d'entités éligibles
cS    Classe sélectionnée

Traitement

(Initialisation de la boucle sur les classes d'entités utilisatrices)

$$nE \leftarrow 0 \text{ et } FmI = V + 2^{(p-1)} - 1 \tag{1}$$

(Boucle sur les classes d'entités utilisatrices)
Pour c = 1 à m
    (Passage éventuel à l'état d'éligibilité)
    si e(c) = Faux,
    et si V ≥ F(c), alors

$$e(c) \leftarrow Vrai \tag{2}$$

    et

$$F(c) \leftarrow F(c)+P(c) \tag{3}$$

(Mise à jour éventuelle du nombre de classes éligibles, mise à jour éventuelle de l'échéance minimale des classes éligibles et de la classe d'entités utilisatrices sélectionnée)

$$\text{si } e(c) = Vrai, \text{ alors } nE \leftarrow nE + 1, \tag{4}$$

$$\text{et si } nE = 1, \text{ ou si } F(c) < FmE, \tag{}$$

$$\text{alors } cS \leftarrow c \text{ et } FmE \leftarrow F(c) \tag{5,6}$$

(Mise à jour éventuelle des classes inéligibles)
    sinon (si e(c) = Faux),

$$\text{et si } F(c) < FmI, \text{ alors } FmI \leftarrow F(c) \tag{7}$$

(Mise à jour de l'entité utilisatrice sélectionnée)

$$uS \leftarrow u(cS), \tag{8}$$

(Mise à jour des variables de la classe d'entités utilisatrices sélectionnée, éligibilité de la classe selon la prochaine entité à servir)

$$u(cS) \leftarrow s(uS) \tag{9}$$

$$\text{et } e(cS) \leftarrow nd(uS) \tag{10}$$

(Mise à jour de l'heure virtuelle)

$$pV \leftarrow pV(uS)$$

$$V \leftarrow V + pV \tag{11}$$

$$\text{et, si } nE = 1 \text{ et } V < FmI, \text{ alors } V \leftarrow FmI \tag{12}$$

(Fin)

$$\text{retourne } (uS, Q(uS)) \tag{13}$$

**ANNEXE III**

Notations

**I. Interface d'utilisation**

| | |
|---|---|
| n | nombre d'utilisateurs |
| u | indice d'un utilisateur (1 à n) |
| m | nombre de classes |
| c | indice d'une classe (1 à m) |
| D(u) | débit nominal de l'utilisateur u |
| P(c) | période de la classe c |
| Sélection ( )→uS,QuS | fonction d'appel du gestionnaire de ressource pour une sélection |
| uS | indice de l'utilisateur sélectionné; si aucun utilisateur n'est activé, uS=0; l'appel est à renouveler, après un délai éventuel |
| QuS | quantum attribué à l'utilisateur sélectionné |
| Activation (uA) | fonction d'appel du gestionnaire de ressource pour activer ou réactiver l'utilisateur uA |

**2. Paramètres calculés à l'initialisation**

| | |
|---|---|
| c(u) | classe à laquelle appartient l'utilisateur u |
| Q(u) | quantum de l'utilisateur u initialisé à P(c(u)) x D/Dmax |

Dmax    somme des débits nominaux de tous les utilisateurs

**3. Variables conservées d'un appel au gestionnaire de ressource au suivant**

3.1 Variables attachées aux utilisateurs

F(u)    échéance virtuelle de l'utilisateur u (dans la file des utilisateurs nouveaux, échéance actuelle ; dans la file des utilisateurs anciens, échéance précédente)

s(u)    utilisateur qui suit l'utilisateur u dans la file où il se trouve, si elle existe; initialisé à 0, valeur de s(u) si u n'est dans aucune file ; s(u)=u si u est le dernier de sa file

a(u)    état activé de l'utilisateur u, initialisé à Faux

3.2 Variables attachées aux classes

pun(c)    premier utilisateur de la file des utilisateurs nouveaux de la classe c, initialisé à 0, valeur de pun(c) si la file est vide

dun(c)    dernier utilisateur de la file des utilisateurs nouveaux de la classe c ; sans signification si pun(c)=0

Fn(c)    échéance virtuelle du premier utilisateur de la file des utilisateurs nouveaux de la classe c

pua(c)    premier utilisateur de la file des utilisateurs anciens de la classe c, initialisé à 0

dua(c)    dernier utilisateur de la file des utilisateurs anciens de la classe c

Fa(c)    échéance virtuelle du premier utilisateur de la file des utilisateurs anciens de la classe c

ea(c)    état d'éligibilité du premier utilisateur de la file des utilisateurs anciens de la classe c

3.3 Variables attachées à l'ensemble du gestionnaire de ressource

V    heure virtuelle

D    somme des débits nominaux des utilisateurs présents dans les files du gestionnaire de ressource, initialisé à 0

**4. Variables qui ne sont pas conservées d'un appel au gestionnaire de ressource au suivant**

FmE    échéance virtuelle minimale parmi celles des utilisateurs nouveaux, ou anciens éligibles

FmI    échéance virtuelle minimale parmi celles des utilisateurs anciens inéligibles qui sont en tête de leur file

nfs    nombre de files qui ont en tête un utilisateur susceptible d'être sélectionné (files non vide d'utilisateurs nouveaux et files non vides d'utilisateurs anciens s'ils ont en tête un utilisateur éligible)

cS    classe sélectionnée

tfs ,    type de la file sélectionnée (valeurs : "nouveaux" ou "anciens")

ca      classe de l'utilisateur à activer ou réactiver

pV      progression de l'heure virtuelle

<u>Traitement de la fonction Sélection ( )→uS,QuS</u>

(s'il n'y a aucun utilisateur actif, fin de traitement)
si D=0, alors :
        retour (uS=0, QuS sans signification)

(Boucle sur le numéro de classe ; examen de chacune des files pour : (0) rendre éligible les utilisateurs de tête de leur file qui sont restés inéligibles alors que l'heure virtuelle a atteint ou dépassé leur échéance virtuelle ; (1) trouver l'utilisateur nouveau, ou ancien éligible, dont l'échéance virtuelle est la plus proche (s'il en existe un), (2) compter le nombre de files qui ont en tête un utilisateur pouvant être sélectionné, (3) déterminer l'échéance virtuelle la plus proche parmi celles des utilisateurs anciens inéligibles qui sont en tête de leur file (s'il en existe)

$$cS \leftarrow 0$$

$$nfs \leftarrow 0$$

$$FmI \leftarrow FmE \leftarrow V + 2^{\wedge}(p-1) - 1$$

Pour c=1 à m
        si pun(c)≠0, alors :

    nfs←nfs+1
    si Fn(c)<FmE, alors : FmE←Fn(c)
    cS←c
    tfs←"nouveaux"

      si pua(c)≠0, alors :

    si ea(c) = Faux et V>=Fa(c), alors :

        ea(c)=Vrai
        Fa(c)←Fa(c)+P(c)

    si ea(c) = Faux et si Fa(c)<FmI, alors :

        FmI←F(c)

    si ea(c)=Vrai, alors :

        nfs←nfs+1
        si Fa(c)<FmE, alors : FmE←Fa(c)
        cS←c
        tfs←"anciens"

        Fin pour

(mise à jour des variables de la classe et de l'utilisateur sélectionné)
si tfs="nouveaux", alors :

    uS←pun(cS)
    pun(cS)←s(uS)
    si pun(cS)=uS, alors : pun(cS)←0 nfs←nfs-1

sinon : Fn(cS)←F(pun(cS))

sinon :

uS←pua(cS)
pua(cS)←s(uS)
si pua(cS)=uS, alors : pua(cS)←0 nfs←nfs-1 sinon :

Fa(cS)←F(pua(cS)) si V<Fa(cS), alors :

ea(c)←faux
nfs←nfs-1

(si l'utilisateur sélectionné est activé, mise de celui-ci en fin de la file des utilisateurs anciens de sa classe et désactivation)
si a(uS)=Vrai, alors :

si pua(cS)=0, alors : pua(cS)←uS
si dua(cS)≠0, alors : s(dua(cS))←uS
dua(cS)=uS
s(uS)←uS
si F(uS)<FmI, alors : FmI=F(uS)
a(uS)←Faux

(si l'utilisateur sélectionné n'est pas activé, élimination de celui-ci de toute file, puis retour à une nouvelle sélection)
sinon (c'est-à-dire si a(uS)=Faux) :

s(uS)←0
D←D-D(u)

si nfs=0 et V<FmI et D>0, alors V←FmI
        retour au début du traitement (mise à jour de l'heure virtuelle)
QuS←Q(uS)
pV←QuS*Dmax/D
V←V+pV
si nfs=0 et V<FmI, alors : V←FmI
(fin)
Retour (uS, QuS)

Traitement de la fonction Activation (uA)

(si l'utilisateur est déjà dans une file du gestionnaire de ressource, mémorisation de son état réactivé et fin)
si s(uA)≠0, alors :

a(u)←Vrai
Retour ( )

(calcul de l'échéance virtuelle de uA)
ca←c(uA)
F(uA)←V+P(ca)
(mise de uA à la fin de la file des utilisateurs nouveaux de sa classe)
si pun(cA)=0, alors :

pun(cA)←uA
Fn(ca)←F(uA)

sinon (c'est-à-dire si pun≠0), alors: s(dun(cA))←uA dun(cA)=uA
s(uA)←uA

(fin)
Retour ( )

$$(1) \quad : \quad \gamma(t) = \sum_{k=1}^{k=N} D(k)$$

$$(2) \quad : \quad Q_i(t) = \int_{d_i(t)}^{f_i(t)} \frac{d\tau}{\gamma(\tau)}$$

$$(3) \quad : \quad q(t) = \int_{t_0(t)}^{t} \frac{d\tau}{\gamma(\tau)}$$

$$(4) \quad : \quad E_i(t) = q\big(f_i(t)\big)$$

$$(5) \quad : \quad E_i(t) = q\big(d_i(t)\big) + \frac{Q_i}{D_i}$$

$$(6) \quad : \quad pV(uS) = Q(uS) / \sum_{k=1}^{N} D(k)$$

**Revendications**

1.  Dispositif de gestion partagée d'une ressource (1) entre plusieurs utilisateurs, du type comprenant:

    -   une mémoire de travail (3), apte à stocker des identifiants d'utilisateurs ($u_i$), ainsi que plusieurs paramètres-part ($D_i$), et plusieurs quantités ($E_i$) susceptibles d'avancer,
    -   un moyen de décision (6) pour attribuer une tranche de service choisie ($Q_i$) de la ressource à un utilisateur sélectionné (uS) comme possédant la quantité ($E_i$) la moins avancée, et pour faire avancer ensuite la quantité ($E_i$) de cet utilisateur sélectionné (uS) selon un incrément choisi ($dE_i$),
    -   un moyen de liaison mémoire (5), pour associer un paramètre-part ($D_i$) et une quantité ($E_i$) à chaque identifiant d'utilisateur ($u_i$), tout en définissant des files d'utilisateurs de type "premier entré - premier sorti" (FIFO), telles que l'identifiant de tête d'une file désigne toujours l'utilisateur ayant la quantité ($E_i$) la moins avancée dans cette file,

**caractérisé en ce que** la mémoire de travail (3) est apte à stocker en outre un nombre limité de valeurs d'incréments (P(c)), **en ce que** le moyen de liaison mémoire (5) est agencé, d'une part, pour associer à chaque utilisateur l'une de ces valeurs d'incréments (P(c)), et, d'autre part, pour définir lesdites files à partir desdites valeurs d'incréments (P(c)) en nombre limité, et **en ce que** le moyen de décision attribue à l'utilisateur sélectionné (uS) une tranche de service (Q(uS)) associée à un couple (D(uS),P(c)) représenté par son paramètre-part (D(uS)) et l'incrément de sa file (P(c)), selon une loi prédéterminée.

2. Dispositif selon la revendication 1, **caractérisé en ce que** la ladite loi prédéterminée comprend le fait que la tranche de service (Q(uS)) attribuée audit utilisateur sélectionné (uS), est fonction du produit de son paramètre-part (D(uS)) par l'incrément de sa file (P(c)).

3. Dispositif selon l'une des revendications 1 et 2, **caractérisé en ce que** la mémoire (3) est apte à stocker, en outre, une quantité globale (V) susceptible d'avancer, et **en ce que** le moyen de décision (6) est agencé pour faire avancer, à chaque attribution de la ressource, la quantité globale (V) selon un incrément global choisi (pV), et pour refuser toute attribution de ressource à un utilisateur (u_i) tant que la quantité globale (V) est moins avancée que la quantité (E_i) de cet utilisateur.

4. Dispositif selon la revendication 3, **caractérisé en ce que** le moyen de décision (6) est agencé pour définir, à chaque attribution de la ressource à un utilisateur (uS), un incrément global (pV), tiré de l'incrément de file (P(c)) de cet utilisateur (uS) et pondéré par un coefficient choisi pour que l'avance de la quantité globale (V) soit représentative des quantités de services attribuées.

5. Dispositif selon l'une des revendications précédentes, **caractérisé en ce que** la mémoire (3) comprend une zone "files" (FIFO) comprenant, pour chaque file, un incrément de file (P(c)) et l'identifiant de l'utilisateur de tête (u(c)), et une zone "utilisateurs" comprenant, pour chaque utilisateur, son identifiant (u), son paramètre-part (D(u)), ainsi qu'une information de fin de file (nd(u)).

6. Dispositif selon la revendication 5, **caractérisé en ce que** le moyen de liaison mémoire (5) est agencé, d'une part, pour définir lesdites files (FIFO) en tant que listes circulaires, et d'autre part, pour n'associer qu'une seule quantité (F(c)) aux utilisateurs d'une même liste, tandis que ladite zone "files" (FIFO) de la mémoire comprend une quantité (F(c)) pour chaque liste.

7. Dispositif selon la revendication 6, **caractérisé en ce que** le moyen de décision attribue des tranches de service (Q(uS)) aux utilisateurs (u(c)) de la liste de quantité (F(c)) la moins avancée, et **en ce qu'**il fait avancer la quantité (F(c)) de cette liste après l'attribution d'une tranche de service à l'utilisateur de fin de liste.

8. Dispositif selon l'une des revendications précédentes, **caractérisé en ce que**, chaque utilisateur (u_i) étant susceptible de demander une tranche de service (Q_i) de la ressource, il comporte une liaison entrée/sortie (4), agencée pour distinguer les utilisateurs demandeurs (a(u)=vrai) des utilisateurs non demandeurs de la ressource (a(u)=faux).

9. Dispositif selon la revendication 8 **caractérisé en ce que** le moyen de liaison mémoire (5) est agencé en outre pour coopérer avec ladite liaison entrée/sortie (4), et pour définir des files distinctes d'utilisateurs nouvellement demandeurs (tfs="nouveaux") et d'utilisateurs anciennement demandeurs (tfs="anciens").

10. Dispositif selon la revendication 9, prise en combinaison avec l'une des revendications 3 et 4, **caractérisé en ce que** le moyen de liaison mémoire affecte à un utilisateur nouvellement demandeur (u) une quantité (F(u)) représentative de la quantité globale (V).

11. Dispositif selon l'une des revendications 8 à 10, **caractérisé en ce que** le moyen de décision (6) est agencé pour éliminer d'une file un utilisateur (u) non demandeur (a(u)=faux) apparaissant en tête de cette file (pua(c)=u).

12. Dispositif selon la revendication 11, prise en combinaison avec l'une des revendications 3 et 4, **caractérisé en ce que** ladite élimination d'un utilisateur non demandeur est effectuée lorsque l'utilisateur (u) est autorisé à utiliser la ressource (ea[c(u)]=vrai) et possède la quantité la moins avancée (F(u)=FmE).

**Claims**

1. Device for shared management of a resource (1) between several users, of the type comprising:

   - a work memory (3), able to store user identifiers ($u_i$), as well as several share parameters ($D_i$), and several amounts ($E_i$) capable of advancing,
   - a decision means (6) for allocating a chosen service slice ($Q_i$) of the resource to a user selected (uS) as possessing the least advanced amount ($E_i$), and for subsequently advancing the amount ($E_i$) of this selected user (uS) according to a chosen increment ($dE_i$),
   - a memory link means (5), for associating a share parameter ($D_i$) and an amount ($E_i$) with each user identifier ($u_i$), while defining user queues of the "first in - first out" (FIFO) type, such that the identifier at the head of a queue always designates the user having the least advanced amount ($E_i$) in this queue,

   **characterized in that** the work memory (3) is able to store in addition a limited number of values of increments (P(c)), **in that** the memory link means (5) is contrived, on the one hand, so as to associate one of these values of increments (P(c)) with each user, and, on the other hand, to define the said queues on the basis of the said values of increments (P(c)) in limited number, and **in that** the decision means allocates the selected user (uS) a service slice (Q(uS)) associated with a pair (D(uS), P(c)) represented by its share parameter (D(uS)) and the increment of its queue (P(c)), according to a predetermined law.

2. Device according to Claim 1, **characterized in that** the said predetermined law comprises the fact that the service slice (Q(uS)) allocated to the said selected user (uS), is dependent on the product of its share parameter (D(uS)) times the increment of its queue (P(c)).

3. Device according to one of Claims 1 and 2, **characterized in that** the memory (3) is able to store, in addition, an overall amount (V) capable of advancing, and **in that** the decision means (6) is contrived so as, with each allocation of the resource, to advance the overall amount (V) according to a chosen overall increment (pV), and so as to deny any allocation of resource to a user ($u_i$) so long as the overall amount (V) is less advanced than the amount ($E_i$) of this user.

4. Device according to Claim 3, **characterized in that** the decision means (6) is contrived so as to define, with each allocation of the resource to a user (uS), an overall increment (pV), derived from the queue increment (P(c)) of this user (uS) and weighted by a coefficient chosen so that the advance of the overall amount (V) is representative of the amounts of services allocated.

5. Device according to one of the preceding claims, **characterized in that** the memory (3) comprises a (FIFO) "queues" area comprising, for each queue, a queue increment (P(c)) and the identifier of the head user (u(c)), and a "users" area comprising, for each user, his identifier (u), his share parameter (D(u)), as well as an end of queue item (nd(u)).

6. Device according to Claim 5, **characterized in that** the memory link means (5) is contrived, on the one hand, so as to define the said (FIFO) queues in the guise of circular lists, and on the other hand, so as to associate only a single amount (F(c)) with the users of one and the same list, whereas the said (FIFO) "queues" area of the memory comprises an amount (F(c)) for each list.

7. Device according to Claim 6, **characterized in that** the decision means allocates service slices (Q(uS)) to the users (u(c)) of the list of least advanced amount (F(c)), and **in that** it advances the amount (F(c)) of this list after allocating a service slice to the end of list user.

8. Device according to one of the preceding claims, **characterized in that**, each user ($u_i$) being capable of requesting a service slice ($Q_i$) of the resource, it comprises an input/output link (4), contrived so as to distinguish the requesting users (a(u)=true) from the non-requesting users of the resource (a(u)=false).

9. Device according to Claim 8, **characterized in that** the memory link means (5) is contrived in addition so as to cooperate with the said input/output link (4), and so as to define distinct queues of newly requesting users (tfs="new") and of formerly requesting users (tfs="former").

10. Device according to Claim 9, taken in combination with one of Claims 3 and 4, **characterized in that** the memory link means assigns a newly requesting user (u) an amount (F(u)) representative of the overall amount (V).

11. Device according to one of Claims 8 to 10, **characterized in that** the decision means (6) is contrived so as to eliminate from a queue a non-requesting (a(u)=false) user (u) appearing at the head of this queue (pua(c)=u).

12. Device according to Claim 11, taken in combination with one of Claims 3 and 4, **characterized in that** the said elimination of a non-requesting user is performed when the user (u) is authorized to use the resource (ea[c(u)] =true) and possesses the least advanced amount (F(u)=FmE).

**Patentansprüche**

1. Vorrichtung zur verteilten Verwaltung eines Betriebsmittels (1) zwischen mehreren Benutzern, enthaltend:

   - einen Arbeitsspeicher (3), der dazu eingerichtet ist, die Identifikatoren von Benutzern ($u_i$) sowie mehrere Teilparameter ($D_i$) und mehrere Mengen ($E_i$), die zum Verschieben geeignet sind, zu speichern,

   - eine Entscheidungseinrichtung (6), um einen gewählten Dienstanteil ($Q_i$) des Betriebsmittels einem ausgewählten Benutzer (uS) als die am wenigstens verschobene Menge ($E_i$) besitzend zuzuweisen und um dann die Menge ($E_i$) dieses ausgewählten Benutzers (uS) nach einem gewählten Inkrement ($dE_i$) verschieben zu lassen,

   - eine Speicherverbindungsenrichtung (5), um jedem Identifikator von Benutzern ($u_i$) einen Teilparameter ($D_i$) und eine Menge ($E_i$) zuzuordnen, wobei Benutzerreihenfolgen vom Typ "wer zuerst kommt, geht zuerst" (FIFO) so definiert werden, daß der Identifikator am Kopf einer Reihe stets den Benutzer bezeichnet, der die in dieser Reihe am wenigsten verschobene Menge ($E_i$) hat,

   **dadurch gekennzeichnet, daß** der Arbeitsspeicher (3) dazu eingerichtet ist, außerdem eine begrenzte Anzahl von Inkrementwerten (P(c)) zu speichern, und daß die Speicherverbindungseinrichtung (5) einerseits dazu eingerichtet ist, daß sie jedem Benutzer einen dieser Inkrementwerte (P(c)) zuordnet und andererseits die genannten Reihenfolgen bestimmt, von den Inkrementwerten (P(c)) in begrenzter Zahl ausgehend, und daß die Entscheidungseinrichtung dem ausgewählten Benutzer (uS) einen Dienstanteil (Q(uS)) zuweist, der einem Paar (D(uS), P(c)) zugeordnet ist, das durch seinen Teilparameter (D(uS)) und dem Inkrementwert (P(c)) seiner Reihe nach einem vorbestimmten Gesetz dargestellt wird.

2. Vorrichtung nach Anspruch 1, **dadurch gekennzeichnet, daß** das genannte vorbestimmte Gesetz die Tatsache enthält, daß der Dienstanteil (Q(uS)), der dem ausgewählten Benutzer (uS) zugewiesen ist, vom Produkt seines Teilparameters (D(uS)) mit dem Inkrementwert seiner Reihe (P(c)) abhängig ist.

3. Vorrichtung nach einem der Ansprüche 1 und 2, **dadurch gekennzeichnet, daß** der Speicher (3) dazu eingerichtet ist, weiterhin eine Gesamtmenge (V) zu speichern, die zum Verschieben geeignet ist, und daß die Entscheidungseinrichtung (3) so betrieben ist, daß sie bei jeder Betriebsmittelzuweisung die Gesamtmenge (V) gemäß einem gewählten Gesamtinkrement (pV) verschieben läßt und jede Betriebsmittelzuweisung an einen Benutzer ($u_i$) solange zurückweist, wie die Gesamtmenge (V) weniger verschoben ist wie die Menge ($E_i$) dieses Benutzers.

4. Vorrichtung nach Anspruch 3, **dadurch gekennzeichnet, daß** die Entscheidungseinrichtung (6) dazu eingerichtet ist, bei jeder Betriebsmittelzuweisung an einen Benutzer (uS) ein Gesamtinkrement (pV) zu definieren, das dem Reiheninkrementwert (P(c)) dieses Benutzers (uS) entnommen ist und mit einem gewählten Koeffizienten gewichtet ist, damit die Verschiebung der Gesamtmenge (V) für die zugewiesenen Dienstleistungsmengen repräsentativ ist.

5. Vorrichtung nach einem der vorhergehenden Ansprüche, **dadurch gekennzeichnet, daß** der Speicher (3) eine "Reihen"-Zone (FIFO) enthält, die für jede Reihe ein Reiheninkrement (P(c)) und den Identifikator des ersten Benutzers (u(c)) enthält, und eine "Benutzer"-Zone, die für jeden Benutzer seinen Indentifikator (u), seinen Teilparameter (D(u)) sowie eine Information über das Reihenende (nd(u)) enthält.

6. Vorrichtung nach Anspruch 5, **dadurch gekennzeichnet, daß** die Speicherverbindungseinrichtung (5) dazu eingerichtet ist, einerseits die genannten Reihen (FIFO) als Umlauflisten zu definieren und andererseits nur eine einzige Menge (F(c)) an die Benutzer einer selben Liste zuzuordnen, während die genannte "Reihen"-Zone (FI-FO) des Speichers eine Menge (F(c)) für jede Liste enthält.

7.  Vorrichtung nach Anspruch 6, **dadurch gekennzeichnet, daß** die Entscheidungseinrichtung Dienstabschnitte (Q(uS)) an die Benutzer (u(c)) der am wenigstens verschobenen Mengenliste (F(c)) zuweist, und daß sie die Menge (F(c)) dieser Liste nach Zuweisung eines Dienstabschnitts an den Benutzer am Ende der Liste verschieben läßt.

8.  Vorrichtung nach einem der vorhergehenden Ansprüche, **dadurch gekennzeichnet, daß** jeder Benutzer ($u_i$) in der Lage ist, einen Dienstabschnitt ($Q_i$) von dem Betriebsmittel zu verlangen und sie daher eine Verbindung Eingang/Ausgang (4) aufweist, die dazu eingerichtet ist, die das Betriebsmittel anfordernden Benutzer (a(u)=echt) von den das Betriebsmittel nicht anfordernden Benutzern (a(u)=falsch) zu unterscheiden.

9.  Vorrichtung nach Anspruch 8, **dadurch gekennzeichnet, daß** die Speicherverbindungseinrichtung (5) weiterhin dazu eingerichtet ist, mit der Verbindung Eingang/Ausgang (4) zusammenzuarbeiten und um bestimmte Reihenfolgen neu anfordernder Benutzer (tfs="neu") und früher bereits anfordernder Benutzer (tfs="alt") zu bestimmen.

10. Vorrichtung nach Anspruch 9 in Kombination mit einem der Ansprüche 3 und 4, **dadurch gekennzeichnet, daß** die Speicherverbindungseinrichtung einen neu anfordernden Benutzer (u) eine Menge (F(u)) zuweist, die für die Gesamtmenge (V) repräsentativ ist.

11. Vorrichtung nach einem der Ansprüche 8 bis 10, **dadurch gekennzeichnet, daß** die Entscheidungseinrichtung (6) dazu eingerichtet ist, aus einer Reihenfolge einen Benutzer (u), der nicht anfordert (a(u)=falsch), zu entfernen, der am Kopf dieser Reihenfolge (pua(c)=u) erscheint.

12. Vorrichtung nach Anspruch 11 in Kombination mit einem der Ansprüche 3 und 4, **dadurch gekennzeichnet, daß** die genannte Entfernung eines nicht anfordernden Benutzers ausgeführt wird, wenn der Benutzer (u) autorisiert ist, das Betriebsmittel (ea)[c(u)]=echt) zu verwenden, und die am wenigsten verschobene Menge (F(u)=FmE) besitzt.

FIG.1

FIG.2

| UTILISATEURS | FIFOS |
|:---:|:---:|
| u<br>D (u)<br><br>n d (u)<br>pV(u) | P (c)<br>F (c)<br><br>u (c)<br>e (c) |
| GESTIONNAIRE<br>V , Qmax ||

## FIG. 3a

| UTILISATEURS | FIFOS "NOUVEAUX" | FIFOS "ANCIENS" |
|:---:|:---:|:---:|
| u<br>D (u)<br>Q (u)<br>C (u)<br>F (u)<br>a (u)<br>s (u) | P (c)<br>pun (c)<br>dun (c)<br>Fn (c) | P (c)<br>pua (c)<br>dua (c)<br>Fa (c)<br>ea (c) |
| GESTIONNAIRE<br>V , Qmax , Dmax |||

## FIG. 3b